# EUROPEAN PATENT APPLICATION

(11) **EP 3 252 851 A1**
(43) Date of publication of application: **06.12.2017**
(21) Application number: 17168196.8
(22) Date of filing: 26.04.2017
(51) Int. Cl.: H01M 2/16, H01M 4/14, H01M 4/16, H01M 4/20, H01M 10/12

(54) **LEAD-ACID BATTERY SYSTEMS AND METHODS**

(30) Priority: 31.05.2016 US 201615168861
(71) Applicant: Johns Manville, Denver, CO 80202 (US)
(72) Inventor: GUO, Zhihua, Centennial, CO Colorado 80112 (US); SHARMA, Gautam, Cleveland, TN Tennessee 37312 (US); NANDI, Souvik, Highland Ranch, CO Colorado 80130 (US); ASRAR, Jawed, Englewood, CO Colorado 80111 (US); DIETZ III, Albert G., Davidson, NC North Carolina 28036 (US)
(74) Representative: Mai Dörr Besier European Patent Attorneys

(57) **Abstract**

A lead-acid battery includes a first electrode with a first grid, and a first mixture pasted onto the first grid. The first mixture includes a first plate material with acid resistant glass fibers that resist shedding of the first plate material during operation of the lead-acid battery.

## Description

### FIELD OF THE INVENTION

The disclosure generally relates to lead-acid batteries.

### BACKGROUND OF THE INVENTION

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Lead-acid batteries are widely used because of their reliability and relatively low cost. For example, most automobiles include a lead-acid battery to start the engine and power various onboard systems. Although there are many types of lead-acid batteries, their general construction includes "positive" and "negative" electrodes (e.g., lead or lead alloy electrodes) in contact with an acid electrolyte, typically dilute sulfuric acid. During discharge, the lead-acid battery produces electricity as the sulfuric acid reacts with the electrodes. More specifically, the acid electrolyte combines with the negative and positive electrodes to form lead sulfate. As lead sulfate forms, the negative electrode releases electrons and the positive plate loses electrons. The net positive charge on the positive electrode attracts the excess negative electrons from the negative electrode enabling the battery to power a load. To recharge the acid-battery, the chemical process is reversed.

During discharge of a lead-acid battery, the positive and negative electrodes expand as lead sulfate forms on and in within the electrodes. Likewise as the lead-acid battery charges, the electrodes contract as the lead sulfate dissolves. Over time, the expansion and contraction of the electrodes may cause pieces of the electrodes to break off. As the electrodes shed material, the battery gradually loses capacitance. In some situations, the accumulation of electrode particulate in a battery case may form a direct electrical connection between the electrodes that short-circuits the cell. The battery may also short circuit if dendrites (i.e., a crystal or crystalline mass with a branching, treelike structure) extend between the electrodes and form a direct electrical connection. Dendrites may also form as lead sulfate forms and then dissolves while discharging and charging the battery.

### SUMMARY OF THE INVENTION

The present disclosure is directed to a lead-acid battery. The lead-acid battery includes a first electrode plate, or simply called plate, with a first grid and a first mixture pasted on the first grid. The first mixture includes a first plate material with embedded acid resistant glass fibers that resist shedding of the first plate material from the electrode during operation of the lead-acid battery.

An aspect of the disclosure includes a lead-acid battery with a first electrode that has a first grid and a first mixture pasted on the grid. The first mixture includes a first plate material mixed with an acid resistant binder that resist shedding of the first plate material during operation of the lead-acid battery.

Another aspect of the disclosure includes a method of making an electrode for a lead-acid battery. The method begins by combining acid resistant glass fibers with at least one of an acid and white water. Once combined, the acid resistant glass fibers are then dispersed and added to a plate material. The method then mixes the acid resistant glass fibers and plate material together before applying the mixture onto a grid.

### BRIEF DESCRIPTION OF THE DRAWINGS

Various features, aspects, and advantages of the present invention will be better understood when the following detailed description is read with reference to the accompanying figures in which like characters represent like parts throughout the figures, wherein:
FIG. 1 is an exploded view of an embodiment of a lead-acid battery cell;
FIG. 2 is a cross-sectional view of an embodiment of a lead-acid battery cell;
FIG. 3 is a cross-sectional view of an embodiment of a lead-acid battery cell;
FIG. 4 is a front view of an embodiment of a positive or negative electrode containing acid resistant glass fibers;
FIG. 5 is a front view of an embodiment of a positive or negative electrode containing acid resistant glass fibers;
FIG. 6 is a front view of an embodiment of a positive or negative electrode containing an acid resistant binder;
FIG. 7 is a front view of an embodiment of a positive or negative electrode containing an acid resistant binder and acid resistant glass fibers;
FIG. 8 is an embodiment of a method for making a positive or negative electrode with acid resistant glass fibers;
FIG. 9 is an embodiment of a method for making a positive or negative electrode with an acid resistant binder; and
FIG. 10 is an embodiment of a method for making a positive or negative electrode with acid resistant glass fibers and an acid resistant binder.

### DETAILED DESCRIPTION

One or more specific embodiments of the present invention will be described below. These embodiments are only exemplary of the present invention. Additionally, in an effort to provide a concise description of these exemplary embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The terms acid resistant glass fibers and acid resistant binder are used throughout this description. Glass fibers can be acid resistant depending on their glass chemistry. According to DIN 12116 : 2001-03 acid resistance/acid durability is classified into four classes depending on the amount of weight loss in an acid solution. In this description, glass fibers are considered to be acid resistant if they fall into categories S1-S3.
S1 = acid proof 0.0 - 0.7 mg/dm² (weight loss)
S2 = weakly acid soluble 0.7 - 1.5 mg/dm² (weight loss)
S3 = moderately acid soluble 1.5 - 15.0 mg/dm² (weight loss)
S4 = strongly acid soluble more than 15.0 mg/dm² (weight loss)

While the term acid resistant binder is widely used in the battery industry to mean a binder capable of withstanding a corrosive battery environment for the life of the battery, it still lacks a technical definition. In this description, acid resistant binder is defined using the test found in BCI Battery Technical Manual (BCIS-03B, Revised March-2010, "23. CHEMICAL/OXIDATION RESISTANCE BY HOT SULFURIC ACID"). The test uses acid resistant glass fibers (as defined above) that are formed into a nonwoven mat to achieve 20% binder LOI (loss on ignition; weight%) +/- 3%. The nonwoven mat is then placed in boiling sulfuric acid (e.g., sulfuric acid that has a specific gravity of 1.280 at 25°C) for approximately 3 hours and if the weight loss is less than 10 wt.% of the original mat weight, the binder is considered acid resistant.

The embodiments discussed below include a lead-acid battery cell with an electrode that resists shedding and/or dendrite formation. In some embodiments, the electrode may include a plate material (e.g., positive active or negative active material and other components or additives) mixed with acid resistant glass fibers. In operation, the acid resistant glass fibers reduce or block separation of the plate material from the electrode. Acid resistant glass fibers resist oxidation and/or decomposition in an acid environment throughout the life of the battery. In another embodiment, the electrode may include an acid resistant binder mixed with the plate material. Acid resistant binder resists oxidation and/or decomposition in an acid environment throughout the life of the battery. Like the acid resistant glass fibers, the acid resistant binder resists separation of the plate material from the electrode. In some embodiments, the electrode may include acid resistant glass fibers and acid resistant binder mixed with plate material to block or reduce separation of the plate material from the electrode. Furthermore, the method of producing the electrode may enable a homogenous or substantially homogenous mixture between the plate material and the acid resistant glass fibers.

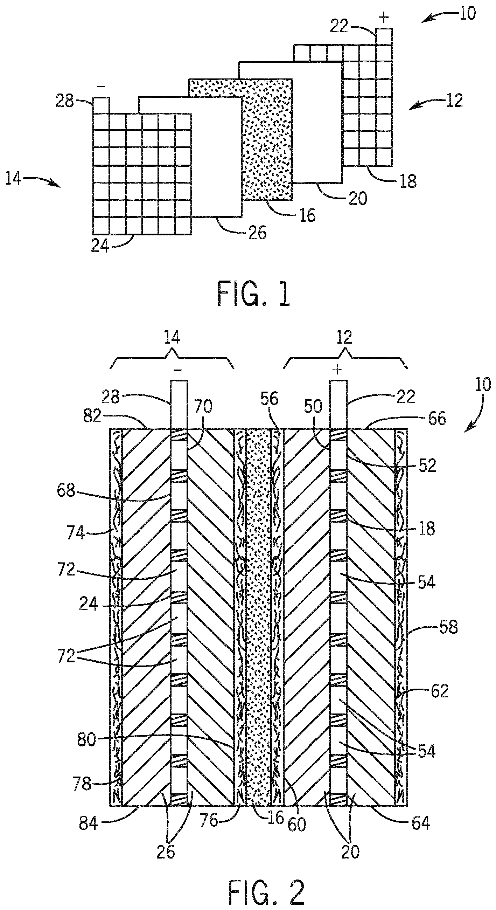

FIG. 1 is an exploded view of an embodiment of a lead-acid battery cell 10. Each cell 10 provides an electromotive force (i.e., volts) that may be used for powering a load (e.g., car, lights, radio, etc.). Lead-acid batteries may include multiple cells 10 in series or parallel to either increase the voltage or current flow. The cell 10 includes a positive electrode 12 and a negative electrode 14 separated by a battery separator 16. The positive electrode 12 includes a grid 18 (e.g., conductive grid) made out of a lead alloy material (e.g., lead with antimony). The grid 18 provides structural support for a positive plate material 20 that is pasted onto the grid 18. The positive plate material 20 may include active positive material (e.g., lead dioxide), and other components and additives (e.g., like silica, calcium sulfate, etc.). In some embodiments, the grid 18 may have a positive terminal (e.g., current conductor) 22 to facilitate electrical connection to the negative electrode 14.

The negative electrode 14 likewise includes a grid 24 (e.g., conductive grid) made out of a lead or lead alloy material (e.g., lead with antimony). The grid 24 provides structural support for a negative plate material 26 that is pasted onto the grid 24. The negative plate material 26 may include active negative material (e.g., lead) and other components and additives (e.g., lignosulfonate, barium sulfate, and carbon material). The grid 24 may also include a negative terminal (e.g., current conductor) 28 to facilitate electrical connection to the positive electrode 12.

In order to create an electro-chemical reaction, the positive and negative electrodes 12, 14 are immersed or are in contact with an electrolyte (not shown) (e.g., 30-40% by weight sulfuric acid aqueous solution). In the chemical reaction, the negative electrode 14 releases electrons and the positive electrode 12 loses electrons as lead sulfate forms. The net positive charge on the positive plate attracts the excess negative electrons from the negative plate producing electricity. To block electricity from flowing directly between the positive and negative electrodes 12, 14, the cell 10 includes a battery separator 16. As illustrated, the battery separator 16 is positioned between the positive and negative electrodes 12, 14 to block the flow of electricity, while still enabling ionic transport to continue the chemical reaction. In some embodiments, the separator 16 may be a microporous membrane made out of a polymeric film that has negligible conductance. The polymeric film may include micro-sized voids that allow ionic transport (i.e., transport of ionic charge carriers) across the separator 16. The polymeric film may include various types of polymers including polyolefins, polyvinylidene fluoride, polytetrafluoroethylene, polyamide, polyvinyl alcohol, polyester, polyvinyl chloride, nylon, polyethylene terephthalate, or combination thereof. In some embodiments, the separator 16 may be an absorbent glass mat (AGM) made out of acid resistant glass fibers or a combination of acid resistant glass fibers and other fibers. The AGM absorbs the electrolyte (e.g., sulfuric acid and water) used in the chemical reaction but still separates the electrodes 12, 14 from each other.

During the chemical reaction the positive and negative plate material 20, 26 expand with the formation of lead sulfate. Similarly, when the battery is recharged the positive and negative plate material 20, 26 contract as the lead sulfate dissolves. Over time the expansion and contraction of the positive and negative plate material 20, 26 may cause pieces of the positive and negative plate material 20, 26 to separate from the electrodes 12, 14. The separation of positive and negative plate material 20, 26 may be referred to as "shedding." As the electrodes 12, 14 shed the cell 10 gradually loses capacitance. In some situations, the loss of positive and negative plate material 20, 26 may accumulate in the bottom of the battery case and form a direct electrical connection between the electrodes 12, 14 that short circuits the cell 10. The cell 10 may also short circuit if dendrites (i.e., a crystal or crystalline mass with a branching, treelike structure) connect the electrodes 12, 14. Dendrites may also form as lead sulfate forms and then dissolves during the discharging and charging of the cell 10. To reduce/block shedding and dendrite formation the positive and negative plate material 20, 26 may include acid resistant glass fibers and/or acid resistant binder. The acid resistant glass fibers and/or acid resistant binder hold the positive and negative plate material 20, 26 together during the repeated cycles of contraction and expansion as the cell 10 is charged and discharged. The acid resistant glass fibers and/or acid resistant binder facilitate retention of the plate material 20, 26 by their resistance to the acid environment (e.g., resists decomposing and/or oxidizing in a lead-acid battery environment during the life of the battery/cell 10). In other words, they are able to support the plate material 20, 26 throughout the life of the battery/cell 10.

FIG. 2 is a cross-sectional view of an embodiment of a lead-acid battery cell 10. As illustrated, the positive electrode 12 includes positive plate material 20 on opposing sides 50 and 52 of the grid 18. By including positive plate material 20 on side 50 and 52, the positive electrode 12 is able to form part of two neighboring cells 10. The grid 18 may be made out of lead alloys (e.g., lead with antimony) in the form of a grid or plate. In FIG. 2, the grid 18 is a grid that includes one or more apertures 54. In some embodiments, the apertures 54 of the grid 18 may be filled with positive plate material 20. Filling the apertures 54 with the positive plate material 20, may facilitate coupling as well as increase the electrical contact area between the grid 18 and the positive plate material 20. As explained above, the positive plate material 20 may include acid resistant glass fibers and/or acid resistant binder that hold the positive plate material 20 together during the repeated cycles of contraction and expansion as the cell 10 is charged and discharged. In some embodiments, the positive electrode 12 may also include reinforcement mats 56 and 58 that further reinforce the positive plate material 20 and reduce shedding and dendrite formation during operation. The reinforcement mats 56 and 58 couple to respective faces 60 and 62 of the positive plate material 20. In some embodiments, the reinforcement mats 56, 58 may wrap around opposing ends 64, 66 of the positive electrode 12. While reinforcement mats 56 and 58 are illustrated, the acid resistant glass fibers and/or acid resistant binder may reinforce the positive plate material 20 enabling cell 10 construction without the reinforcement mats 56, 58. Embodiments without reinforcement mats 56, 58 may reduce the size of the cell 10 and therefore the overall battery size.

As explained above, the cell 10 includes a negative electrode 14. The negative electrode 14 may include negative plate material 26 on opposing sides 68, 70 of the grid 24. By including negative plate material 26 on both sides 68 and 70, the negative electrode 14 is able to form part of two cells 10. The grid 24 may be made out of lead alloys (e.g., lead with antimony) in the form of a grid. In FIG. 2, the grid 24 is a grid that includes one or more apertures 72. In some embodiments, the apertures 72 of the grid 24 may be filled with negative plate material 26. Filling the apertures 72 with the negative plate material 26 may facilitate coupling as well as increase the electrical contact area between the grid 24 and the negative plate material 26. As explained above, the negative plate material 26 may include acid resistant glass fibers and/or acid resistant binder that hold the negative plate material 26 together during the repeated cycles of contraction and expansion as the cell 10 is charged and discharged. In some embodiments, the reinforcement mats 74 and 76 may further reinforce the negative plate material 26 and reduce shedding and dendrite formation during operation. The reinforcement mats 74 and 76 couple to respective faces 78 and 80 of the negative plate material 26. In some embodiments, the reinforcement mats 74, 76 may wrap around opposing ends 82, 84 of the negative electrode 14. While reinforcement mats 74 and 76 are illustrated, the acid resistant glass fibers and/or acid resistant binder may reinforce the negative plate material 26 enabling cell 10 construction without the reinforcement mats 74, 76. Embodiments without reinforcement mats 74, 76 may reduce the overall size of the cell 10 and therefore the overall battery size.

As explained above, the positive and negative electrodes 12, 14 are separated by a battery separator 16. The battery separator 16 blocks electricity from flowing directly between the electrodes 12, 14 inside the cell 10. In some embodiments, the separator 16 may be a microporous membrane made out of a polymeric film that has negligible conductance. In other embodiments, the separator 16 may be an absorbent glass mat (AGM) made out of acid resistant glass fibers or a combination of acid resistant glass fibers and other fibers. In operation, AGM absorbs the electrolyte (e.g., sulfuric acid and water) used in the chemical reaction while still electrically separating the electrodes 12, 14.

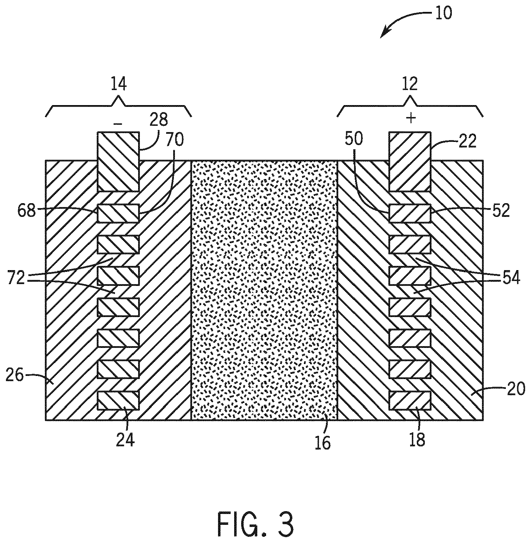

FIG. 3 is a cross-sectional view of an embodiment of a lead-acid battery cell 10. As illustrated, the positive electrode 12 includes a grid 18 with apertures 54. A positive plate material 20 couples to opposing sides 50 and 52 of the grid 18 and fills the apertures 54. Similarly, the negative electrode 14 includes negative plate material 26 that fills the apertures 72 and coats opposing sides 68 and 70 of the grid 24. By coating opposing sides of the grids 18 and 24 the positive and negative electrodes 12, 14 may form part of neighboring cells 10. In some embodiments, the positive and negative plate material 20, 26 may cover one side of the respective grids 18 and 24 and fill the respective apertures 54, 72. In contrast to FIG. 2, the positive and negative electrodes 12, 14 in FIG. 3 do not include reinforcement mats that block and/or reduce shedding, instead the positive and/or negative plate material 20, 26 may include acid resistant glass fibers and/or acid resistant binder. The acid resistant glass fibers and/or acid resistant binder reinforce the positive/negative plate materials 20, 26 to block/reduce shedding and dendrite formation.

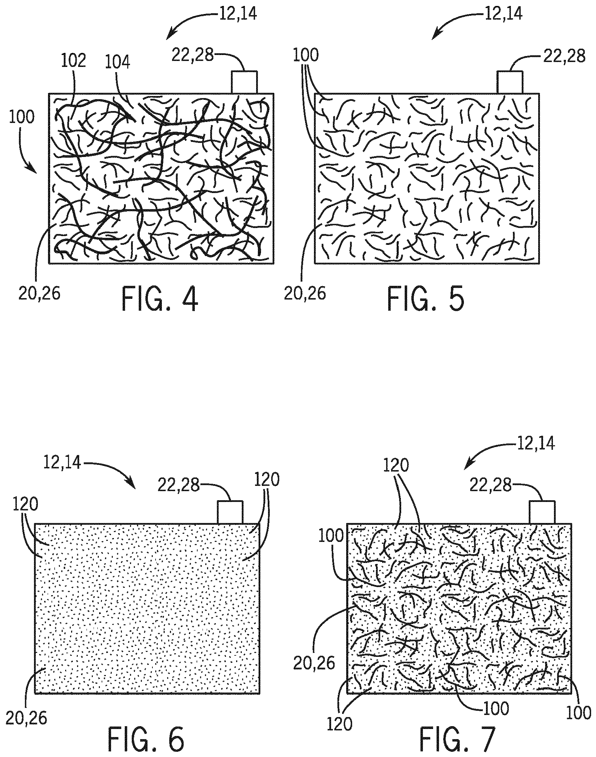

FIG. 4 is a front view of an embodiment of a positive or negative electrode 12, 14 containing acid resistant glass fibers 100 (e.g., C glass, T glass, 253 glass). By using acid resistant glass fibers 100 without acid resistant binder to support the plate material 20, 26, the positive and/or negative electrode 12, 14 reduce or block the introduction of organics into the battery environment. The acid resistant glass fibers 100 may occupy between 0.01-10% by weight of the electrodes 12, 14. In some embodiments, the reinforcing aspects of the acid resistant glass fibers 100 may be enhanced by blending acid resistant glass fibers 100 of different sizes. For example, there may be 1, 2, 3, 4, 5, or more differently sized acid resistant glass fibers that are blended together in the positive and/or negative plate material 20, 26. In FIG. 4, the positive or negative electrode 12, 14 includes coarse acid resistant glass fibers 102 and fine acid resistant glass fibers 104. The coarse acid resistant glass fibers 102 may have average glass fiber diameters ranging between about 6 µm and about 20 µm; between about 6 µm and about 11 µm; between about 8 µm and about 13 µm; 10 µm and about 20 µm; or between about 13 µm and about 20 um. In contrast, the fine acid resistant glass fibers 104 may have average diameters ranging from about 0.1 µm to about 5 µm. The average lengths of the coarse acid resistant glass fibers 102 may range between about 1/8 inch and about 1½ inches. In some embodiments, the length of the coarse acid resistant glass fibers 102 may contribute to retention of the positive and negative plate materials 20, 26 by physically entangling with and/or creating additional contact points for adjacent coarse and/or fine acid resistant glass fibers 102, 104. In some embodiments, the coarse fibers 102 may be continuous fibers.

The blend of coarse acid resistant glass fibers 102 to fine acid resistant glass fibers 104 may also vary in percentage (weight). For example, the percentage (weight) of coarse acid resistant glass fibers 102 may vary between 10% and 90% and the fine acid resistant glass fibers 104 may be vary between 10% and 90%. In another embodiment, the blend may vary between 25% and 75% (weight) of the coarse acid resistant glass fibers 102 and between 25% and 75% (weight) of the fine acid resistant glass fibers 104. In yet another embodiment, the blend of coarse acid resistant glass fibers 102 and the fine acid resistant glass fibers 104 may be approximately equal (i.e., each 50wt-% of the coarse acid resistant glass fibers 102 and fine acid resistant glass fibers 104). As will be explained below, the acid resistant glass fibers 100 may be evenly or substantially evenly distributed throughout the positive and/or negative plate material 20, 26. The process of preparing the acid resistant glass fibers 100 for mixing with the positive and/or negative plate materials 20, 26 may enable the homogenous mixture or substantially homogeneous mixture.

In some embodiments, the acid resistant glass fibers 100 may include a conductive outer coating that facilitates electron flow and the electro-chemical reactions within the cell 10. The conductive material may be sprayed, vapor deposited, or otherwise coated onto the acid resistant glass fibers 100. Because lead-acid batteries contain aggressive electrochemical reactions, the conductive material may be made out of non-reactive material. For example, the conductive material may include a non-reactive metal, a nanocarbon, graphene, graphite, a conductive polymer (e.g., polyanilines), nanocarbons or carbon nanotubes, titanium oxides, vanadium oxides, tin oxides, and the like. In a specific embodiment, the conductive material may include carbon nano-platelets, such as graphene.

As explained above, by mixing acid resistant glass fibers 100 into the positive and/or negative plate material 20, 26 the acid resistant glass fibers 100 support the plate material and resist shedding and/or dendrite formation. Furthermore, mixing the acid resistant glass fibers 100 into the positive and/or negative plate material 20, 26 may enable the positive and/or negative electrodes 12, 14 to operate without reinforcement mats 56, 58, 76, and 78, and thus reduce the overall size of the cell 10.

FIG. 5 is a front view of an embodiment of a positive or negative electrode 12, 14 containing acid resistant glass fibers 100 (e.g., C glass, T glass, 253 glass). By using acid resistant glass fibers 100 without acid resistant binder to support the plate material 20, 26, the positive and/or negative electrode 12, 14 reduce or block the introduction of organics into the battery environment. Furthermore, instead of including multiple types of acid resistant glass fibers 100 (e.g., coarse, fine, etc.), a single type of fiber 100 may be mixed with the positive and/or negative plate material 20, 26. For example, the acid resistant glass fibers 100 may be fine acid resistant glass fibers with average diameters ranging from about 0.1 µm to about 5 µm. In some embodiments, the acid resistant glass fibers 100 may be coarse acid resistant glass fibers with an average diameter between 6 µm and about 20 µm and lengths between about 1/8 inch and about 1½ inches. In some embodiments, the acid resistant glass fibers 100 may occupy between 0.01-10% by weight of the electrodes 12, 14. The acid resistant glass fibers 100 may also be evenly or substantially evenly distributed throughout the positive and/or negative plate material 20, 26.

FIG. 6 is a front view of an embodiment of a positive or negative electrode 12, 14 containing an acid resistant binder 120. The acid resistant binder 120 (e.g., binder that resists decomposing and/or oxidizing in a lead-acid battery environment during the life of the battery/cell 10) facilitates retention of the positive or negative plate material 20, 26. In other words, during operation of the cell 10 the acid resistant binder 120 resists shedding and/or dendrite formation of the positive or negative plate material 20, 26 by binding with the plate material in three dimensions (e.g., 3D binder network). The acid resistant binder 120 may also have the strength to survive manufacturing operations and the permeability to enable acid to penetrate the positive and/or negative plate material 20, 26. For example, the acid resistant binder 120 may be an acrylic based acid resistant binder, a SMAc (Styrene Maleic Anhydride Amic Acid) based acid resistant binder, etc. The acid resistant binder may be in the form of an emulsion or solution. In some embodiments, the acid resistant binder may include a substituted or unsubstituted acrylic acid and/or a substituted or unsubstituted acrylic ester. For example, the substituted or unsubstituted acrylic ester may include methyl methacrylate and/or ethyl acrylate, among other alkyl alkylacrylates and alkyl acrylates (e.g., a combination of methyl methacrylate and ethyl acrylate). The acid resistant binder 120 may further include acrylamide compounds such as methyl acrylamide. Examples of the substituted or unsubstituted acrylic ester may include two substituted or unsubstituted acrylic esters, where the esters form an acrylic ester copolymer. Examples of available acid resistant binders include RHOPLEX™ HA-16 available from the Dow Chemical Company, Hycar® 26-0688 available from Lubrizol Advanced Materials, Inc., and PLEXTOL® M 630 available from Synthomer Deutschland GmbH. In some embodiments, there may be more than one acid resistant binder 120 mixed with the positive or negative plate material 20, 26. For example, there may be 1, 2, 3, 4, 5, or more acid resistant binders 120 mixed with the positive or negative plate material 20, 26. The mixture containing the acid resistant binder(s) 120 and the positive or negative plate material 20, 26 may include between 0.01-10%, 0.05-5%, or 0.1-1% by weight of the acid resistant binder 120. In some embodiments, 0.1-1% by weight of the acid resistant binder 120 provides sufficient reinforcement while enabling the plate material 20, 26 to react with the electrolyte (e.g., does not cover the surface of the plate material blocking chemical reactions). In some embodiments, the acid resistant binder 120 may enable manufacturing of a cell 10 without one or more of the reinforcement mats 56, 58, 76, and 78 shown in FIG. 2, which may reduce the size of the cell 10.

FIG. 7 is a front view of an embodiment of a positive or negative electrode containing acid resistant glass fibers 100 and an acid resistant binder(s) 120. The combination of acid resistant glass fibers 100 and acid resistant binder 120 may further enhance resistance to shedding and dendrite formation by the cell 10. For example, the acid resistant binder 120 may bind positive and/or negative plate material 20, 26 to the acid resistant glass fibers 100 as well as strengthen the bonds that hold the positive and/or negative plate material 20, 26 together. In some embodiments, the acid resistant binder 120 may also bind acid resistant glass fibers 100 together within the mixture increasing the structural integrity of the positive and/or negative electrodes 12, 14. As explained above, the acid resistant glass fibers 100 may be coarse acid resistant glass fibers 102, fine acid resistant glass fibers 104, or a combination thereof. As explained above, the acid resistant binder(s) 120 can survive in a lead-acid environment throughout the life of the battery. The mixture of acid resistant glass fibers 100 and acid resistant binder 120 in the positive or negative material 20, 26 may be substantially homogenous to strengthen the entire or substantially all of the positive or negative electrodes 12, 14 against shedding and dendrite formation.

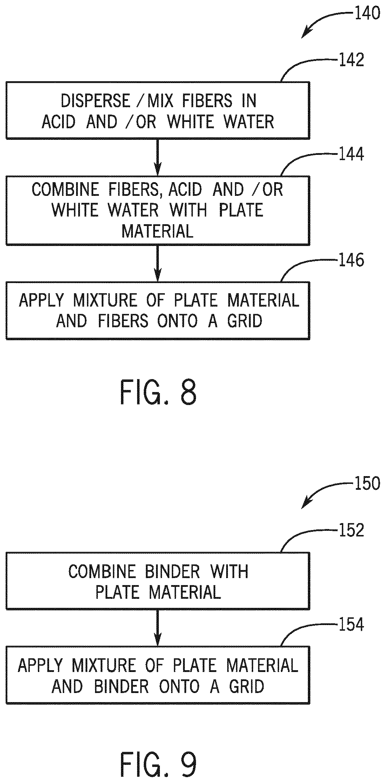

FIG. 8 is an embodiment of a method 140 for making a positive or negative electrode 12, 14 with acid resistant glass fibers 100. The method 140 begins by combining the acid resistant glass fibers 100 with an acid (e.g., 30-40% by weight sulfuric acid aqueous solution with a pH<3) and/or white water, block 142. The acid resistant glass fibers 100 are mixed with acid and/or white water in order to separate/disperse the acid resistant glass fibers 100. By dispersing the acid resistant glass fibers 100 in acid and/or white water, the method 140 may increase the homogeneity of the acid resistant glass fibers 100 in the mixture with the positive and/or negative plate material 20, 26. In addition, by dispersing the acid resistant glass fibers 100 in acid and/or white water, the acid resistant glass fibers 100 may be readily combined with the positive and/or negative plate material 20, 26 as the positive and/or negative plate material 20, 26 may be formed into a paste using acid and/or white water. After dispersing/separating the acid resistant glass fibers 100, the acid resistant glass fibers 100 are combined and mixed with the positive and/or negative plate material 20, 26, block 144. The mixture (e.g., paste) of the acid resistant glass fibers 100 and positive and/or negative plate material 20, 26 may then be applied (e.g., poured, sprayed) onto a grid 18, 24 to form a positive or negative electrode 12, 14, block 146.

FIG. 9 is an embodiment of a method 150 for making a positive or negative electrode 12, 14 with an acid resistant binder 120. The method 150 begins by combining one or more acid resistant binders 120 with a positive and/or negative plate material 20, 26, block 152. The mixture of the acid resistant glass fibers 100 and positive and/or negative plate material 20, 26 may then be applied (e.g., poured, sprayed) onto a grid 18, 24 to form a positive or negative electrode 12, 14, block 154.

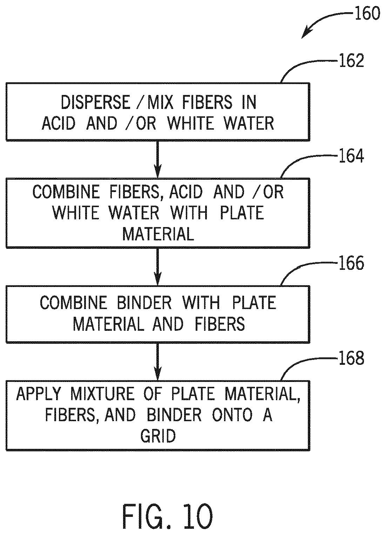

FIG. 10 is an embodiment of a method 160 for making a positive or negative electrode 12, 14 with acid resistant glass fibers 100 and an acid resistant binder 120. The method 160 begins by combining the acid resistant glass fibers 100 in an acid (e.g., sulfuric acid) and/or white water, block 162. The acid resistant glass fibers 100 are mixed with acid and/or white water in order to separate/disperse the acid resistant glass fibers 100 before combining the acid resistant glass fibers 100 with the positive and/or negative plate material 20, 26. As explained above, dispersing the acid resistant glass fibers 100 in acid and/or white water increases the homogeneity of the acid resistant glass fibers 100 in the mixture with the positive or negative plate material 20, 26. After dispersing/separating the acid resistant glass fibers 100, the acid resistant glass fibers 100 are combined and mixed with the positive and/or negative plate material 20, 26, block 164. An acid resistant binder(s) 120 may then be combined and mixed with the positive and/or negative plate material 20, 26 and acid resistant glass fibers 100, block 166. In some embodiments, the acid resistant binder 120 may be mixed with the positive and/or negative plate material 20, 26 before the acid resistant glass fibers 100 are mixed in. In still other embodiments, the acid resistant glass fibers 100 may be mixed with the acid resistant binder 120 and then together the acid resistant glass fibers 100 and acid resistant binder 120 may be mixed with the positive and/or negative plate material 20, 26. The mixture of acid resistant glass fibers 100, acid resistant binder 120, and positive and/or negative plate material 20, 26 may then be applied (e.g., poured, sprayed) onto a grid 18, 24 (e.g., plate, grid) to form a positive or negative electrode 12, 14, block 146.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the spirit and scope of the invention as defined by the following appended claims.

## Claims

1. A lead-acid battery, comprising:
a first electrode, comprising:
(i) a first grid; and
(ii) a first mixture pasted on the first grid,
wherein the first mixture comprises a first plate material with acid resistant glass fibers that resist shedding of the first plate material during operation of the lead-acid battery.

2. The battery as claimed in claim 1, wherein the first electrode is a positive electrode and the first plate material comprises lead dioxide.

3. The battery as claimed in claim 1, wherein the first electrode is a negative electrode and the first plate material comprises lead.

4. The battery as claimed in one or more of claims 1 to 3, comprising a second electrode, the second electrode comprising a second grid, and a second mixture pasted on the second grid, wherein the second mixture comprises a second plate material with embedded acid resistant glass fibers that resist shedding of the second plate material during operation of the lead-acid battery.

5. The battery as claimed in claim 4, comprising a separator positioned between the first electrode and the second electrode to electrically insulate the first and second electrodes, preferably the separator is an absorbent glass mat or a microporous polymeric film.

6. The battery as claimed in one or more of claims 1 to 5, wherein the first mixture comprises an acid resistant binder that resists shedding of the first plate material from the first electrode during operation of the lead-acid battery.

7. The battery as claimed in one or more of claims 1 to 6, wherein the acid resistant glass fibers comprise 0.01%-10% by weight of the first electrode after drying.

8. The battery as claimed in one or more of claims 1 to 7, wherein the acid resistant glass fibers comprise at least one of micro-acid resistant glass fibers with diameters less than 5 µm, coarse-acid resistant glass fibers with a diameter greater than 5 µm, or a combination thereof.

9. A lead-acid battery, comprising:
a first electrode, comprising:
(i) a first grid; and
(ii) a first mixture pasted onto the first grid,
wherein the first mixture comprises a first plate material mixed with an acid resistant binder that resist separation of the first plate material during operation of the lead-acid battery.

10. The battery as claimed in claim 9, wherein the first electrode is a positive electrode and the first plate material comprises lead dioxide.

11. The battery as claimed in claim 9, wherein the first electrode is a negative electrode and the first plate material comprises lead.

12. The battery as claimed in one or more of claims 9 to 11, comprising a second electrode, the second electrode comprising a second grid, and a second mixture pasted onto the second grid, wherein the second mixture comprises a second plate material mixed with the acid resistant binder that resist separation of the second plate material during operation of the lead-acid battery, preferably the battery further comprising a separator positioned between the first electrode and the second electrode to electrically insulate the first and second electrodes.

13. The battery as claimed in one or more of claims 9 to 12, wherein the first mixture comprises acid resistant glass fibers that resist separation of the first plate material from the first electrode during operation of the lead-acid battery.

14. The battery as claimed in one or more of claims 9 to 13, wherein the acid resistant binder comprises 0.01%-10% by weight of the first electrode after drying.

15. The battery as claimed in one or more of claims 9 to 14, wherein the acid resistant binder comprises an acrylic based emulsion.

16. A method of making an electrode for a lead-acid battery, comprising:
(i) combining acid resistant glass fibers with at least one of an acid and white water;
(ii) dispersing the acid resistant glass fibers;
(iii) adding the acid resistant glass fibers to a plate material;
(iv) mixing the acid resistant glass fibers in the plate material to form a mixture; and
(v) applying the mixture to a grid.

17. The method as claimed in claim 16, comprising adding an acid resistant binder to the mixture.
